(19)

Europäisches
Patentamt
European
Patent Office
Office européen
des brevets

(11) **EP 4 657 566 A1**

(12) **EUROPEAN PATENT APPLICATION**

(43) Date of publication:
**03.12.2025 Bulletin 2025/49**

(51) International Patent Classification (IPC):
**H01M 4/505** (2010.01)    **H01M 4/525** (2010.01)

(21) Application number: **25170656.0**

(22) Date of filing: **15.04.2025**

(52) Cooperative Patent Classification (CPC):
**H01M 4/525; H01M 4/505**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024 JP 2024089057**

(71) Applicant: **Prime Planet Energy & Solutions, Inc.
Chuo-ku, Tokyo 103-0022 (JP)**

(72) Inventor: **NONAKA, Shoji
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **POSITIVE ELECTRODE ACTIVE MATERIAL, POSITIVE ELECTRODE PLATE, AND
NON-AQUEOUS ELECTROLYTE SECONDARY BATTERY**

(57)    A positive electrode active material includes a secondary particle (1) in which primary particles (10) are aggregated. A ratio (L11/L12) of an average value of maximum lengths L11 of first particles (11) in a first direction (d1) and an average value of maximum lengths L12 of the first particles (11) in a second direction (d2) as defined in the claims is 0.5 to 1.10. A ratio (L21/L22) of an average value of maximum lengths L21 of second particles (12) in the first direction (d1) and an average value of maximum lengths L22 of the second particles (12) in the second direction (d2) as defined in the claims is 1.40 or more. The second particles (12) include oriented particles that have major axis directions (d3) radially oriented in the first direction and that have the average value of the maximum lengths L21 of 640 nm or less.

FIG.1

12(10)    12(10)    1

11(10)

11(10)

EP 4 657 566 A1

**Description**

CROSS REFERENCE TO RELATED APPLICATIONS

This nonprovisional application is based on Japanese Patent Application No. 2024-089057 filed on May 31, 2024 with the Japan Patent Office, the entire contents of which are hereby incorporated by reference.

BACKGROUND OF THE INVENTION

Field of the Invention

The present invention relates to a positive electrode active material, a positive electrode plate including the positive electrode active material, and a non-aqueous electrolyte secondary battery including the positive electrode plate.

Description of the Background Art

As a positive electrode active material, a secondary particle in which primary particles are aggregated may be used. WO 2016/002158 discloses use of a positive electrode active material in which primary particles each having a high aspect ratio and primary particles each having a low aspect ratio are mixed in the same secondary particle in order to improve cycling performance of a non-aqueous electrolyte secondary battery.

SUMMARY OF THE INVENTION

When the positive electrode active material in which the two types of primary particles having the different aspect ratios are mixed in the secondary particle is used, discharging capacity and cycling performance of the non-aqueous electrolyte secondary battery may be decreased.
An object of the present disclosure is to provide: a positive electrode active material to obtain a non-aqueous electrolyte secondary battery having excellent discharging capacity and excellent cycling performance; a positive electrode plate using the positive electrode active material; and a non-aqueous electrolyte secondary battery including the positive electrode plate.

[1] A positive electrode active material comprising a secondary particle in which primary particles are aggregated, wherein

the secondary particle is a lithium transition metal composite oxide having a lamellar crystal structure,
the lithium transition metal composite oxide includes Li, Ni, Mn, Co, and M, the M being one or more metal elements selected from a group consisting of Mg, Ca, Al, Ti, V, Cr, Fe, Cu, Zn, Zr, Nb, Mo, Ta, and W,
a molar ratio of the Li, the Ni, the Mn, the Co, and the M is Li:Ni:Mn:Co:M=a:x:y:z:t, where the a, the x, the y, the z, and the t satisfy $1.0 \le a \le 1.3$, $x+y+z+t=1$, $0.25 \le x \le 0.9$, $0 < y \le 0.6$, $0 < z \le 0.6$, and $0 \le t \le 0.1$, and
when the primary particles are classified into first particles constituting an outer periphery of the secondary particle and second particles other than the first particles, a direction from a center of the secondary particle toward the outer periphery of the secondary particle is defined as a first direction, and a direction orthogonal to the first direction is defined as a second direction in a cross sectional image obtained by observing a cross section of the secondary particle,
a ratio (L11/L12) of an average value of maximum lengths L11 of the first particles in the first direction and an average value of maximum lengths L12 of the first particles in the second direction is 0.50 to 1.10,
a ratio (L21/L22) of an average value of maximum lengths L21 of the second particles in the first direction and an average value of maximum lengths L22 of the second particles in the second direction is 1.40 or more, and
the second particles include oriented particles that have major axis directions radially oriented in the first direction and that have the average value of the maximum lengths L21 of 640 nm or less.

[2] The positive electrode active material according to [1], wherein the average value of the maximum lengths L21 of the oriented particles is 600 nm or less.
[3] The positive electrode active material according to [1] or [2], wherein the ratio (L21/L22) in the second particles is 1.50 to 3.00.
[4] The positive electrode active material according to any one of [1] to [3], wherein an average value of Feret diameters of the first particles is 270 nm or less.
[5] The positive electrode active material according to any one of [1] to [4], wherein the average value of the maximum lengths L21 of the second particles is 640 nm or less.

[6] The positive electrode active material according to any one of [1] to [5], wherein in the secondary particle, 50 or more primary particles are aggregated.

[7] A positive electrode plate comprising a positive electrode active material layer including the positive electrode active material according to any one of [1] to [6].

[8] A non-aqueous electrolyte secondary battery comprising the positive electrode plate according to [7].

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram of a secondary particle included in a positive electrode active material according to an embodiment.

Fig. 2 is an explanatory diagram for illustrating directions defined with regard to the secondary particle.

DESCRIPTION OF THE PREFERRED EMBODIMENTS

In the present specification, a numerical range such as "m to n" includes the lower and upper limit values unless otherwise stated particularly. That is, "m to n" indicates a numeric value range of "m or more and n or less". A numerical value freely selected from the numerical range may be employed as a new lower or upper limit value. For example, a new numerical range may be set by freely combining a numerical value described in the numerical range with a numerical value described in another portion of the present specification, table or figure.

In each of the figures, in order to facilitate understanding of the invention, a part of each configuration in the figure may be illustrated in an emphasized or simplified manner, and a structure, a shape, a scale, and the like of each configuration in the figure may be changed from those of the actual configuration.

(Positive Electrode Active Material)

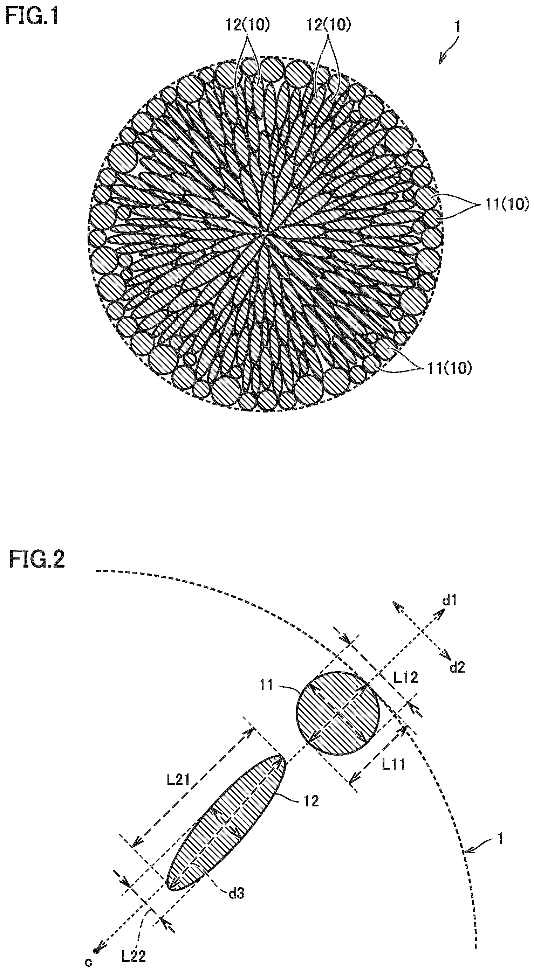

Fig. 1 is a schematic diagram of a secondary particle included in a positive electrode active material according to an embodiment. Fig. 2 is an explanatory diagram for illustrating directions defined with regard to the secondary particle. The positive electrode active material of the present embodiment is used for a positive electrode plate of a non-aqueous electrolyte secondary battery (hereinafter, also referred to as "secondary battery") such as a lithium ion battery.

As shown in Fig. 1, the positive electrode active material includes a secondary particle 1 in which primary particles 10 are aggregated. In secondary particle 1, 50 or more primary particles 10 are preferably aggregated. The number of aggregated primary particles 10 in secondary particle 1 may be 100 or more, may be 1000 or more, and is $5\times10^6$ or less in an ordinary case, and may be $5\times10^3$ or less. The number of aggregated primary particles 10 can be adjusted in accordance with calcination conditions (a calcination temperature, the number of times of performing calcination, a calcination time, and the like) when producing secondary particle 1. The number of aggregated primary particles 10 included in secondary particle 1 can be confirmed through, for example, an SEM image obtained by observation with a scanning electron microscope (hereinafter, also referred to as "SEM").

Secondary particle 1 is a lithium transition metal composite oxide (hereinafter, also referred to as "composite oxide") having a lamellar crystal structure. It can be confirmed by, for example, measurement through an X-ray diffraction method (XRD) or the like that the composite oxide has the lamellar crystal structure. An exemplary lamellar crystal structure of the composite oxide is a hexagonal structure (lamellar rock salt structure), a monoclinic structure, or the like. The composite oxide having the lamellar crystal structure promotes smooth intercalation and deintercalation of lithium ions.

The composite oxide includes Li, Ni, Mn, Co, and M, the M being one or more metal elements selected from a group consisting of Mg, Ca, Al, Ti, V, Cr, Fe, Cu, Zn, Zr, Nb, Mo, Ta, and W, and a molar ratio of the Li, the Ni, the Mn, the Co, and the M is Li:Ni:Mn:Co:M=a:x:y:z:t, where the a, the x, the y, the z, and the t satisfy $1.0\leq a\leq1.3$, $x+y+z+t=1$, $0.25\leq x\leq0.9$, $0<y\leq0.6$, $0<z\leq0.6$, and $0\leq t\leq0.1$.

Metal element M included in the composite oxide should include one or more of the above-described metal elements, but preferably includes at least the W (tungsten). When metal element M includes the W, a positive electrode active material including secondary particle 1 having below-described first particles 11 and below-described second particles 12 is readily obtained.

The molar ratio of the Li is $1.0 \leq a \leq 1.3$, may be $1.00 \leq a \leq 1.25$, may be $1.01 \leq a \leq 1.20$, may be $1.03 \leq a \leq 1.15$, or may be $1.04 \leq a \leq 1.10$. The molar ratio of the Ni is $0.25 \leq x \leq 0.9$, may be $0.25 \leq x \leq 0.90$, may be $0.30 \leq x \leq 0.90$, may be $0.40 \leq x \leq 0.88$, or may be $0.50 \leq x \leq 0.85$. The molar ratio of the Mn is $0 < y \leq 0.6$, may be $0.00 < y \leq 0.60$, may be $0.05 \leq y \leq 0.50$, may be $0.08 \leq y \leq 0.30$, or may be $0.10 \leq y \leq 0.20$. The molar ratio of the Co is $0 < z \leq 0.6$, may be $0.0 < z \leq 0.6$, may be $0.0 < z \leq 0.5$, may be $0.01 \leq z \leq 0.30$, or may be $0.02 \leq z \leq 0.10$. The molar ratio of the M is $0 \leq t \leq 0.1$, may be $0.000 < t \leq 0.100$, may be $0.000 < t \leq 0.080$, may be $0.001 \leq t \leq 0.050$, or may be $0.002 \leq t \leq 0.010$. When the composite oxide includes two or more metal elements M, the molar ratio of the M refers to a total amount of the two or more metal elements.

The composition of the composite oxide can be adjusted in accordance with types of source materials used when producing the composite oxide and a blending amount of the source materials. The composition of the composite oxide can be found by ICP (Inductively Coupled Plasma) atomic emission spectrometry (ICP-AES). More specifically, measurement can be performed in accordance with the general rules for atomic emission spectrometry in JIS K 0116:2014, and for example, the composite oxide is dissolved in accordance with an alkali melting method, is diluted to a predetermined amount with ultrapure water, tartaric acid, or hydrochloric acid, and is analyzed by using a high-resolution ICP atomic emission spectrometer ("PS3500DDII" provided by Hitachi High-Tech Corporation). Respective wavelengths of the elements to be measured in the ICP-AES can be as follows: Li: 670.784 nm; Co: 238.892 nm; Mn: 257.61 nm; and Ni: 231.604 nm.

As shown in Fig. 1, secondary particle 1 included in the positive electrode active material includes the following primary particles 10. When [i] primary particles 10 are classified into first particles 11 constituting an outer periphery of secondary particle 1 and second particles 12 other than first particles 11 (Fig. 1), [ii] a direction from a center c of secondary particle 1 toward the outer periphery of secondary particle 1 is defined as a first direction d1, and a direction orthogonal to first direction d1 is defined as a second direction d2 (Fig. 2) in a cross sectional image obtained by observing a cross section of secondary particle 1, first particles 11 and second particles 12 satisfy the following relation.

First particles 11:
a ratio (L11/L12) of an average value of maximum lengths L11 of first particles 11 in first direction d1 and an average value of maximum lengths L12 of first particles 11 in second direction d2 is 0.50 to 1.10.

Second particles 12:

a ratio (L21/L22) of an average value of maximum lengths L21 of second particles 12 in first direction d1 and an average value of maximum lengths L22 of second particles 12 in second direction d2 is 1.40 or more, and

second particles 12 include oriented particles that have major axis directions radially oriented in first direction d1 and that have the average value of maximum lengths L21 of 640 nm or less.

In the present specification, it is assumed that the cross sectional image obtained by observing the cross section of secondary particle 1 is an SEM image obtained by SEM observation.

First particles 11 refer to primary particles 10 having outer peripheries, at least parts of which constitute a part of the outer periphery of secondary particle 1 in the cross sectional image of secondary particle 1. Second particles 12 refer to primary particles 10 other than first particles 11. That is, second particles 12 are primary particles 10 having outer peripheries that do not constitute the outer periphery of secondary particle 1 in the cross sectional image. The arrangement of first particles 11 and second particles 12 in secondary particle 1 can be adjusted in accordance with the calcination conditions (the calcination temperature, the number of times of performing calcination, the calcination time, and the like) when producing secondary particle 1.

As shown in Fig. 2, in the cross sectional image of secondary particle 1, first direction d1 is a direction from center c of secondary particle 1 toward the outer periphery of secondary particle 1, i.e., a radial direction of secondary particle 1. A plurality of lengths of each of first particle 11 and second particle 12 in first direction d1 and a plurality of lengths of each of first particle 11 and second particle 12 in second direction d2 can be determined, but maximum lengths L11, L12, L21, and L22 are the maximum lengths among the plurality of lengths that can be determined. That is, maximum length L11 of first particle 11 in first direction d1 refers to the maximum length among the lengths of first particle 11 in first direction d1 in the cross sectional image. Maximum length L12 of first particle 11 in second direction d2 refers to the maximum length among the lengths of first particle 11 in second direction d2 orthogonal to first direction d1 in which maximum length L11 is determined in the cross sectional image. Similarly, maximum length L21 of second particle 12 in first direction d1 refers to the maximum length among the lengths of second particle 12 in first direction d1 in the cross sectional image. Maximum length L22 of second particle 12 in second direction d2 refers to the maximum length among the lengths of second particle 12 in second direction d2 orthogonal to first direction d1 in which maximum length L21 is determined in the cross sectional image. As described in Examples below, each of the average values of maximum lengths L11, L12, L21, and L22 is calculated as an average value among 20 or more of target primary particles 10 (first particles 11 or second particles 12) selected in the cross sectional image.

The ratio (L11/L12) in first particle 11 is 0.50 to 1.10, may be 0.55 to 1.08, may be 0.60 to 1.05, and may be 0.70 to 1.00. Since the ratio (L11/L12) in first particle 11 falls within the above range, it can be said that first particle 11 has an isotropic shape, i.e., a shape close to a spherical shape. The ratio (L11/L12) in first particle 11 can be adjusted in accordance with the calcination conditions (the calcination temperature, the number of times of performing calcination, the calcination time, and the like) when producing secondary particle 1.

The ratio (L21/L22) in second particle 12 is 1.40 or more, may be 1.40 to 3.00, is preferably 1.50 to 3.00, may be 1.70 to 2.90, may be 2.00 to 2.80, or may be 2.20 to 2.70. Since the ratio (L21/L22) in second particle 12 falls within the above range, it can be said that second particle 12 has a shape having a large anisotropy, i.e., a shape deviated from the spherical shape, such as an elliptic sphere. The ratio (L21/L22) in second particle 12 can be adjusted in accordance with the calcination conditions (the calcination temperature, the number of times of performing calcination, the calcination time, and the like) when producing secondary particle 1.

Major axis direction d3 of each of second particles 12 refers to a maximum length among lengths straightly connecting any two points on the outer periphery of second particle 12 in the cross sectional image of secondary particle 1. The expression "the major axis directions radially oriented in first direction d1" means that each of second particles 12 is disposed in secondary particle 1 such that a smaller angle of angles formed by major axis direction d3 of second particle 12 and first direction d1 is 45° or less. The angle is preferably 35° or less, is more preferably 30° or less, may be 20° or less, or may be 10° or less.

Second particles 12 include oriented particles. Among second particles 12, the oriented particles are particles that have major axis directions d3 radially oriented in first direction d1 and that have the average value of maximum lengths L21 of 640 nm or less in the cross sectional image of secondary particle 1. The average value of maximum lengths L21 of the oriented particles is preferably 600 nm or less, may be 550 nm or less, may be 500 nm or less, or may be 450 nm or less. The average value of maximum lengths L21 may be 200 to 640 nm, 250 to 600 nm, 300 to 550 nm, or 350 to 500 nm. The oriented particle can be formed by adjusting the calcination conditions (the calcination temperature, the number of times of performing calcination, the calcination time, and the like) when producing secondary particle 1.

When it is assumed that an area occupied by second particles 12 in the cross sectional image of secondary particle 1 is 100%, an area occupied by the oriented particles among second particles 12 is preferably 80% or more, may be 85% or more, may be 90% or more, may be 80 to 100%, may be 85 to 98%, or may be 90 to 95%.

The average value of maximum lengths L21 of second particles 12 is preferably 640 nm or less, is preferably 600 nm or less, or may be 550 nm or less, 500 nm or less, or 450 nm or less. Second particles 12 include particles other than the oriented particles in addition to the oriented particles. The average value of maximum lengths L21 may be 200 to 640 nm, 250 to 600 nm, 300 to 550 nm, or 350 to 500 nm. Maximum length L21 of each of second particles 12 can be adjusted in accordance with the calcination conditions (the calcination temperature, the number of times of performing calcination, the calcination time, and the like) when producing secondary particle 1.

As described above, second particles 12 are disposed on the inner side of secondary particle 1, and second particles 12 have the oriented particles oriented radially. Since the ratio (L21/L22) falls within the above range, each of second particles 12 has a shape with large anisotropy and tends to be greatly expanded/contracted in the short axis direction during charging/discharging of the secondary battery. Since second particles 12 are disposed on the inner side of secondary particle 1 and have the oriented particles oriented radially in secondary particle 1, the directions of second particles 12 when expanded/contracted are facilitated to be aligned in the circumferential direction. Therefore, stresses generated in secondary particle 1 at the time of the expansion/contraction of second particle 12 are facilitated to be, for example, cancelled with each other and are thus relaxed. Therefore, even though second particles 12 are disposed on the inner side of secondary particle 1, stress generated by the expansion/contraction of second particle 12 can be relaxed. Thus, cycling performance of the secondary battery can be improved.

Since the ratio (L11/L12) falls within the above range, each of first particles 11 has an isotropic shape. Since expansion/contraction of first particle 11 during the charging/discharging of the secondary battery is less likely to be anisotropic and is likely to be isotropic, stresses generated in secondary particle 1 during the expansion/contraction of first particle 11 tends to be less likely to be relaxed. A ratio of contact between primary particles 10 constituting the outer peripheral surface of secondary particle 1 is smaller than a ratio of contact between primary particles 10 disposed on the inner side of secondary particle 1. Therefore, the expansion/contraction of primary particle 10 at a portion facing the outer peripheral surface side is less likely to be restricted on the outer peripheral surface side of secondary particle 1, thus resulting in a small influence of the stresses generated in response to the expansion/contraction. Therefore, in secondary particle 1, first particles 11, which are likely to be expanded/contracted isotropically, are disposed to constitute the outer peripheral surface of secondary particle 1, thereby reducing the influence of the stresses generated in response to the expansion/contraction of each of the first particles. Thus, the cycling performance of the secondary battery can be improved.

Since first particles 11 each having the isotropic shape are disposed to constitute the outer peripheral surface of secondary particle 1, a specific surface area of secondary particle 1 is facilitated be increased. Thus, the discharging capacity of the secondary battery can be suppressed from being decreased. Moreover, the resistance of the secondary battery can also be facilitated to be suppressed from being deteriorated.

The particle size of each of first particles 11 is not particularly limited, but is preferably smaller from the viewpoint of increasing the specific surface area of secondary particle 1. Thus, the discharging capacity of the secondary battery can be suppressed from being decreased, and the resistance of the secondary battery can also be suppressed from being deteriorated. In a surface image obtained by observing the surface of the secondary particle, an average value of the Feret diameters of first particles 11 may be 340 nm or less, may be 300 nm or less, is preferably 270 nm or less, is more preferably 250 nm or less, or may be 230 nm or less. The average value of the Feret diameters of first particles 11 is, for example, 150 to 340 nm, may be 150 to 270 nm, may be 180 to 250 nm, or may be 200 to 230 nm. When the average value of the Feret diameters of first particles 11 falls within the above range, the discharging capacity of the secondary battery is facilitated to be suppressed from being decreased, and the resistance of the secondary battery is facilitated to be suppressed from being deteriorated.

In the present specification, it is assumed that the surface image obtained by observing the surface of secondary particle 1 is an SEM image obtained by observation with an SEM. In the present specification, the Feret diameter refers to a maximum distance between tangential lines among the shortest distances between parallel tangential lines each tangential to the contour of first particle 11 in the surface image of secondary particle 1, and the average value of the Feret diameters is calculated as an average value among 200 or more first particles 11 selected in the surface image. The number of first particles 11 selected from the surface image may be 400 or more. The Feret diameter of first particle 11 can be adjusted in accordance with the calcination conditions (the calcination temperature, the number of times of performing calcination, the calcination time, and the like) when producing secondary particle 1.

The positive electrode active material including secondary particle 1 can be obtained, for example, in the following manner: a compound (hereinafter, also referred to as "NiMnCo-containing precursor") including Ni, Mn, and Co, a lithium compound, and, as required, an M-containing compound including metal element M are mixed to obtain a mixture and the mixture is calcinated. Alternatively, the positive electrode active material may be obtained in the following manner: a Ni-containing compound including Ni, a Mn-containing compound including Mn, a Co-containing compound including Co, a lithium compound, and an M-containing compound including metal element M are mixed to obtain a mixture and the mixture is calcinated. Each of the Ni-containing compound, the Mn-containing compound, and the Co-containing compound may include metal element M.

Examples of the NiMnCo precursor include a composite oxide or composite hydroxide containing Ni, Mn, and Co. Examples of the lithium compound include lithium hydroxide, lithium carbonate, or the like. Examples of the M-containing compound include an ammonium compound including metal element M, or the like.

(Positive Electrode Plate)

A positive electrode plate of the present embodiment is formed using the above-described positive electrode active material. According to the positive electrode plate of the present embodiment, it is possible to provide a non-aqueous electrolyte secondary battery having an excellent capacity retention in charging/discharging cycles and allowing for suppression of decreased discharging capacity.

The positive electrode plate can have a positive electrode current collector foil and a positive electrode active material formed on one surface or each of both surfaces of the positive electrode current collector foil. The positive electrode active material is included in a positive electrode active material layer, and the positive electrode active material layer can further include at least one of a binder and a conductive auxiliary agent. The positive electrode active material layer can be formed in the following manner: a positive electrode composite material slurry obtained by adding a solvent such as N-methyl-2-pyrrolidone (NMP) to the materials for forming the positive electrode active material layer, such as the positive electrode active material, the binder, and the conductive auxiliary agent is applied to the positive electrode current collector foil, which is then dried and compressed.

The positive electrode current collector foil is, for example, a metal foil formed using an aluminum material such as aluminum and an aluminum alloy.

Examples of the binder includes: a fluororesin such as polyvinylidene difluoride (PVdF) or polytetrafluoroethylene; a cellulose-based resin such as carboxymethyl cellulose (CMC), methyl cellulose (MC), and hydroxypropyl cellulose; and styrene-butadiene rubber (SBR), and one or more of these can be used.

Examples of the conductive auxiliary agent include a carbon material. Examples of the carbon material include graphite, fibrous carbon, and the like. Examples of the graphite include one or more selected from a group consisting of carbon black (acetylene black, Ketjen black, or the like), coke, and activated carbon. Examples of the fibrous carbon include a carbon nanotube (CNT). The carbon nanotube may be a single-walled carbon nanotube (SWCNT) or may be a multi-walled carbon nanotube such as a double-walled carbon nanotube (DWCNT).

(Non-Aqueous Electrolyte Secondary Battery)

A non-aqueous electrolyte secondary battery (secondary battery) of the present embodiment has the positive electrode plate described above. The secondary battery can include an electrode assembly including the positive electrode plate, and a non-aqueous electrolyte solution, and may have a battery case that accommodates the electrode assembly and the non-aqueous electrolyte solution.

The battery case may include: an exterior package provided with an opening; and a sealing plate that seals the opening. Each of the exterior package and the sealing plate is preferably composed of a metal, and can be formed using aluminum, an aluminum alloy, iron, an iron alloy, or the like. A resin sheet serving as an electrode holder may be disposed between the electrode assembly and the exterior package. Moreover, the battery case may be made of a laminate film. The laminate film has, for example, a stacking structure in which a metal layer and a resin layer are stacked. Edge portions of the laminate film are overlapped and welded, thereby forming the battery case in the form of a pouch.

The electrode assembly may include the positive electrode plate, a negative electrode plate, and a separator. In the electrode assembly, the active material layer of the positive electrode plate and a negative electrode active material layer of the negative electrode plate face each other with the separator being interposed therebetween. The electrode assembly may be of a stacked type in which the positive electrode plate, the negative electrode plate, and the separator are stacked, or may be of a wound type in which a stack in which a positive electrode plate, a negative electrode plate, and a separator are stacked is wound. The wound type electrode assembly may have a flat shape due to pressing after winding the stack.

Generally, the negative electrode plate has a negative electrode current collector foil and a negative electrode active material layer, and the negative electrode current collector foil is, for example, a metal foil formed using a copper material such as copper and a copper alloy. The negative electrode active material layer includes a negative electrode active material and may further include a conductive auxiliary agent, a binder, and the like. The negative electrode active material layer can be formed in the following manner: a negative electrode composite slurry obtained by adding a solvent such as water to the materials for forming the negative electrode active material layer, such as the negative electrode active material, the binder, and the conductive auxiliary agent is applied to the negative electrode current collector foil, which is then dried and compressed.

Examples of the negative electrode active material include a carbon-based active material, a metal-based active material, and the like. Examples of the carbon-based active material include a particle of one or more selected from a group consisting of carbon materials such as graphite, such as natural graphite and artificial graphite, hard carbon, soft carbon, and amorphous coated graphite. Examples of the metal-based active material include a particle of a metal element such as: a simple substance of a metal including an element selected from a group consisting of silicon (Si), tin (Sn), antimony (Sb), bismuth (Bi), titanium (Ti), and germanium (Ge); an oxide of the metal; or the like. The metal-based active material is preferably a particle of one or more selected from a group consisting of Si, SiOx (x=0.5 to 1.5), a composite of Si and C, and Sn.

Examples of the conductive auxiliary agent include the conductive auxiliary agents described as the conductive auxiliary agents that may be included in the positive electrode active material layer. The conductive auxiliary agent may include one or two or more of the above-described conductive auxiliary agents. Examples of the binder include: the cellulose-based resin described as the binder that may be included in the positive electrode active material layer; the polyacrylic acid; the styrene-butadiene rubber (SBR); and the like. The binder may include one or two or more of the above-described binders.

The separator has a base member and may have a functional layer on at least one surface of the base member. The base member can be a porous sheet such as a film or nonwoven fabric composed of a resin such as: polyolefin such as polyethylene and polypropylene; polyester; cellulose; or polyamide. The base member may have a single layer structure or a multilayer structure. Examples of the functional layer include an adhesive layer and a heat-resistant layer, and the function layer can have one or both of them. The adhesive layer can be formed by an adhesive agent, for example. The heat-resistant layer can include, for example, a filler and a binder.

In the non-aqueous electrolyte solution, an electrolyte is preferably contained in a non-aqueous solvent such as an organic solvent. Examples of the electrolyte include $LiPF_6$, $LiBF_4$, $LiClO_4$, $LiFSO_3$, LiBOB (lithium bis(oxalato)borate), and the like. The non-aqueous electrolyte solution may include one or two or more of these electrolytes. Examples of the non-aqueous solvent include ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution can include one or two or more of these non-aqueous solvents. The non-aqueous electrolyte solution may further include an additive agent such as vinylene carbonate (VC), vinylethylene carbonate (VEC), or fluoroethylene carbonate.

[Examples]

Hereinafter, the present disclosure will be described more specifically with reference to examples and comparative examples.

[Examples 1 to 4 and Comparative Examples 1 to 3]

(Production of Positive Electrode Active Material)

A NiMnCo-containing precursor including Ni, Mn, and Co at a ratio of Ni:Mn:Co=83:12:5 (molar ratio), lithium hydroxide monohydrate, and, as required, ammonium paratungstate were mixed to obtain a mixture. The lithium hydroxide monohydrate and the ammonium paratungstate were mixed such that Li and W were included in terms of the number of moles shown in Table 1 with respect to 1 mol (that is, Ni: 0.83 mol, Mn: 0.12 mol, Co: 0.05 mol) as the total number of moles of Ni, Mn, and Co in the NiMnCo-containing precursor. When the number of moles of the W is 0 mol, the ammonium paratungstate is not blended in the mixture.

After the mixture was introduced into a crucible composed of alumina, the crucible was placed in an electric furnace to calcinate the mixture, thereby obtaining a lithium transition metal composite oxide as a positive electrode active material. The calcination of the mixture was performed in the following manner: while measuring a temperature with an alumina-coated K thermocouple being inserted in the mixture inside the crucible, heating is first performed to 500°C at an oxygen flow rate of 4 L/min and a temperature increasing rate of 5°C/min, holding was performed at 500°C for 3 hours, heating was then performed to a temperature of Tmax shown in Table 1 at a temperature increasing rate of 5°C/min, and holding was performed at the temperature of Tmax for 10 hours. The lithium transition metal composite oxide was a secondary particle in which the number of aggregated primary particles was 50 or more.

[Table 1]

| | NiMnCo-Containing Precursor | The Number of Moles with respect to 1 mol as the Total Number of Moles of Ni, Mn, and Co in NiMnCo-Containing Precursor | | Tmax [°C] |
|---|---|---|---|---|
| | Ni:Mn:Co (Molar Ratio) | Li [mol] | W [mol] | |
| Example 1 | 83:12:5 | 1.06 | 0.005 | 805 |
| Example 2 | 83:12:5 | 1.09 | 0.009 | 805 |
| Example 3 | 83:12:5 | 1.06 | 0.009 | 815 |
| Example 4 | 83:12:5 | 1.12 | 0.09 | 805 |
| Comparative Example1 | 83:12:5 | 1.06 | 0 | 795 |
| Comparative Example2 | 83:12:5 | 1.06 | 0.05 | 795 |
| Comparative Example3 | 83:12:5 | 1.06 | 0 | 805 |

(Production of Positive Electrode Plate)

A positive electrode plate was prepared using the positive electrode active material obtained above. The positive electrode active material, acetylene black (AB) serving as a conductive auxiliary agent, and polyvinylidene difluoride (PVdF) serving as a binder were prepared at a ratio of the positive electrode active material : AB : PVdF = 100:1:1 (mass ratio), and these were mixed with N-methyl-2-pyrrolidone (NMP) to prepare a positive electrode composite slurry. The positive electrode composite slurry was applied to an aluminum foil serving as a positive electrode current collector foil, which was dried, compressed, and then cut into a predetermined size to obtain the positive electrode plate.

(Production of Negative Electrode Plate)

A negative electrode active material, which was a mixture of graphite and SiO, was prepared, and styrene-butadiene rubber (SBR) and carboxymethyl cellulose (CMC) were prepared as a binder. The negative electrode active material, the SBR, and the CMC are prepared at a ratio of the negative electrode active material : SBR : CMC = 100:1:1 (mass ratio), and these are mixed with water to prepare a negative electrode composite slurry. The negative electrode composite slurry was applied to a copper foil serving as a negative electrode current collector foil, which was dried, compressed, and then cut into a predetermined size to obtain a negative electrode plate.

(Preparation of Non-Aqueous Electrolyte Secondary Battery)

A separator having a three-layer structure of polypropylene/polyethylene/polypropylene was prepared. The positive electrode plate and the negative electrode plate were stacked with the separator being interposed therebetween, thereby obtaining an electrode assembly. A positive electrode tab, which was formed by the aluminum foil of the positive electrode current collector foil at a region at which the positive electrode active material layer was not formed, and a negative electrode tab, which was formed by the copper foil of the negative electrode current collector foil at a region at which the negative electrode active material layer was not formed, were exposed respectively at both end portions of the electrode assembly. The positive electrode tab was welded to an aluminum plate serving as an external positive electrode current collector, and the negative electrode tab was welded to a copper plate serving as an external negative electrode current collector, then they were inserted into an exterior package of an aluminum laminate film, and the film was welded so as to form an injection portion. A non-aqueous electrolyte solution was injected from the injection portion, and then the injection portion was sealed, thereby obtaining a secondary battery.

The non-aqueous electrolyte solution was prepared by dissolving lithium hexafluorophosphate ($LiPF_6$) serving as an electrolyte at a concentration of 1 mol/L with respect to a mixed solvent in which ethylene carbonate (EC) and ethyl methyl carbonate (EMC) were mixed at EC:EMC=1:3 (volume ratio).

[Acquisition of Cross Sectional Image of Lithium Transition Metal Composite Oxide Compound]

A cross section of the lithium transition metal composite oxide (composite oxide) obtained in each of the examples and the comparative examples was observed with a scanning electron microscope (SEM) to obtain a cross sectional image. Primary particles of the secondary particle in the cross sectional image were classified into first particles constituting the outer periphery of the secondary particle and second particles other than the first particles. In each of the composite oxides, the second particles included particles having major axis directions radially oriented in first direction d1.

20 or more of the first particles in the cross sectional image were selected, the maximum lengths of each first particle in first direction d1 and second direction d2 were measured, and respective average values of the maximum lengths were defined as average values of maximum lengths L11 and L12 of the first particles. A ratio (L11/L12) was calculated based on the average values of maximum lengths L11 and L12. Results are shown in Table 2.

20 or more of the second particles in the cross sectional image were selected, the maximum lengths of each second particle in first direction d1 and second direction d2 were measured, and respective average values of the maximum lengths were defined as average values of maximum lengths L21 and L22 of the second particles. A ratio (L21/L22) was calculated based on the average values of maximum lengths L21 and L22. Results are shown in Table 2.

[Calculation of Feret Diameter of First Particle]

A surface of the lithium transition metal composite oxide obtained in each of the examples and the comparative examples was observed with a scanning electron microscope (SEM) to obtain a surface image. 200 or more of the first particles in the surface image were selected, a maximum distance between tangential lines among the shortest distances between parallel tangential lines each tangential to the contour of each of the first particles was measured, and an average value thereof was defined as an average value of the Feret diameters of the first particles. Results are shown in Table 2.

[Measurement of Discharging Capacity and Evaluation of Cycling Performance]

The secondary battery obtained in each of the examples and the comparative examples was charged to 4.2 V at a current rate of 0.1 C as an activation charging process. Thereafter, a discharging process was performed at 0.1 C to 3.0 V, and a discharging capacity [mAh/g] on this occasion was measured. Results are shown in Table 2.

Then, a charging/discharging process in which the battery was charged to 4.2 V at a current rate of 1 C under a temperature condition of 25°C, was then discharged at 1 C to 2.5 V, and was thereafter rested for 10 minutes was regarded as one cycle, and this was repeated 20 cycles. The discharging capacities obtained by the discharging processes in the charging/discharging processes of the first cycle and the twentieth cycle were measured, and a capacity retention [%] was calculated based on the following formula. Results are shown in Table 2.

Capacity retention [%] = (discharging capacity in the twentieth cycle / discharging capacity in the first cycle) × 100

[Measurement of Resistance Increase Ratio]

A charging/discharging cycle in which the secondary battery having been through the activation charging process was charged under a temperature condition of 25°C until a state of charge (SOC) reached 50%, was rested for 1 hour, and was then discharged at a current value of 5 C for 10 seconds was regarded as one cycle, and this was repeated 20 cycles. An OCV (open circuit voltage) immediately before the discharging was defined as V0 [V], a voltage after 10 seconds of the discharging was defined as V1 [V], and a resistance R was calculated in accordance with the following formula.

$$\text{Resistance } R[\Omega] = (V0\text{-}V1) \, [V] \, / \text{ current value } [A] \text{ of } 1 \, C$$

A resistance in the first cycle is defined as R1, and a resistance in the twentieth cycle is defined as R20, and a resistance increase ratio was calculated in accordance with the following formula. Results are shown in Table 2.

$$\text{Resistance increase ratio } [\%] = (R20\text{-}R1)/R1 \times 100$$

[Table 2]

| | Secondary Particle | | | | Evaluation | | |
|---|---|---|---|---|---|---|---|
| | First Particles | | Second Particles | | Discharging Capacity | Cycling Performance | Resistance Increase Ratio |
| | L11/L12 | Feret Diameter * [nm] | L21/L22 | L21 * [nm] | [mAh/g] | Capacity Retention [%] | [%] |
| Example 1 | 0.64 | 211 | 2.88 | 485 | 204 | 93.0 | 0.94 |
| Example 2 | 0.84 | 187 | 2.65 | 377 | 201 | 92.1 | 0.98 |
| Example 3 | 1.05 | 243 | 2.70 | 532 | 201 | 93.1 | 1.00 |
| Example 4 | 0.91 | 340 | 3.15 | 611 | 198 | 89.2 | 1.12 |
| Comparative Example 1 | 1.16 | 303 | 2.82 | 582 | 196 | 91.8 | 1.05 |
| Comparative Example 2 | 1.53 | 208 | 2.65 | 411 | 189 | 92.2 | 1.08 |
| Comparative Example 3 | 0.82 | 352 | 1.44 | 682 | 201 | 88.1 | 0.91 |
| *: Average Value | | | | | | | |

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A positive electrode active material comprising a secondary particle (1) in which primary particles (10) are aggregated, wherein

the secondary particle (1) is a lithium transition metal composite oxide having a lamellar crystal structure,
the lithium transition metal composite oxide includes Li, Ni, Mn, Co, and M, the M being one or more metal elements selected from a group consisting of Mg, Ca, Al, Ti, V, Cr, Fe, Cu, Zn, Zr, Nb, Mo, Ta, and W,
a molar ratio of the Li, the Ni, the Mn, the Co, and the M is Li:Ni:Mn:Co:M=a:x:y:z:t, where the a, the x, the y, the z, and the t satisfy $1.0 \leq a \leq 1.3$, $x+y+z+t=1$, $0.25 \leq x \leq 0.9$, $0 < y \leq 0.6$, $0 < z \leq 0.6$, and $0 \leq t \leq 0.1$, and
when the primary particles (10) are classified into first particles constituting an outer periphery of the secondary particle (1) and second particles (12) other than the first particles (11), a direction from a center of the secondary particle (1) toward the outer periphery of the secondary particle (1) is defined as a first direction (d1), and a direction orthogonal to the first direction (d1) is defined as a second direction (d2) in a cross sectional image obtained by observing a cross section of the secondary particle (1),
a ratio (L11/L12) of an average value of maximum lengths L11 of the first particles in the first direction and an average value of maximum lengths L12 of the first particles in the second direction is 0.50 to 1.10,

a ratio (L21/L22) of an average value of maximum lengths L21 of the second particles (12) in the first direction (d1) and an average value of a maximum lengths L22 of the second particles (12) in the second direction (d2) is 1.40 or more, and

the second particles (12) include oriented particles that have major axis directions (d3) radially oriented in the first direction (d1) and that have the average value of the maximum lengths L21 of 640 nm or less.

2. The positive electrode active material according to claim 1, wherein the average value of the maximum lengths L21 of the oriented particles is 600 nm or less.

3. The positive electrode active material according to claim 1 or 2, wherein the ratio (L21/L22) in the second particles (12) is 1.50 to 3.00.

4. The positive electrode active material according to any one of claims 1 to 3, wherein an average value of Feret diameters of the first particles (11) is 270 nm or less.

5. The positive electrode active material according to any one of claims 1 to 4, wherein the average value of the maximum lengths L21 of the second particles (12) is 640 nm or less.

6. The positive electrode active material according to any one of claims 1 to 5, wherein in the secondary particle (1), 50 or more primary particles (10) are aggregated.

7. A positive electrode plate comprising a positive electrode active material layer including the positive electrode active material according to any one of claims 1 to 6.

8. A non-aqueous electrolyte secondary battery comprising the positive electrode plate according to claim 7.

FIG.1

12(10)  12(10)          1

11(10)

11(10)

FIG.2

d1

d2

L12

11

L21

12

L11

d3

c    L22

1

## EUROPEAN SEARCH REPORT

**Application Number**

EP 25 17 0656

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 786 116 A1 (ECOPRO BM CO LTD [KR]) 3 March 2021 (2021-03-03) * abstract * * paragraphs [0009] - [0025] * * claims 1-11 * | 1-8 | INV. H01M4/505 H01M4/525 |
| A | CN 108 701 827 A (LG CHEMICAL LTD) 23 October 2018 (2018-10-23) * abstract * * claims 1-12 * | 1-8 | |
| A | EP 2 882 013 A1 (IUCF HYU [KR]; ENERCERAMIC INC [KR]) 10 June 2015 (2015-06-10) * abstract * * paragraphs [0008] - [0034] * * claims 1-24 * | 1-8 | |
| A | WO 2016/002158 A1 (SANYO ELECTRIC CO [JP]) 7 January 2016 (2016-01-07) * abstract * | 1-8 | TECHNICAL FIELDS SEARCHED (IPC) H01M |

The present search report has been drawn up for all claims

| Place of search | Date of completion of the search | Examiner |
|---|---|---|
| Munich | 21 October 2025 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 17 0656

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2025

| Patent document cited in search report | | Publication date | Patent family member(s) | | Publication date |
|---|---|---|---|---|---|
| EP 3786116 | A1 | 03-03-2021 | CN | 112397708 A | 23-02-2021 |
| | | | CN | 118943356 A | 12-11-2024 |
| | | | EP | 3786116 A1 | 03-03-2021 |
| | | | JP | 7171656 B2 | 15-11-2022 |
| | | | JP | 2021034370 A | 01-03-2021 |
| | | | KR | 20210022199 A | 03-03-2021 |
| | | | US | 2021057731 A1 | 25-02-2021 |
| CN 108701827 | A | 23-10-2018 | CN | 108701827 A | 23-10-2018 |
| | | | EP | 3425706 A1 | 09-01-2019 |
| | | | EP | 4510270 A2 | 19-02-2025 |
| | | | JP | 6991530 B2 | 12-01-2022 |
| | | | JP | 2018536972 A | 13-12-2018 |
| | | | JP | 2021180191 A | 18-11-2021 |
| | | | KR | 20170103389 A | 13-09-2017 |
| | | | TW | 201737536 A | 16-10-2017 |
| | | | US | 2019020022 A1 | 17-01-2019 |
| | | | WO | 2017150945 A1 | 08-09-2017 |
| EP 2882013 | A1 | 10-06-2015 | CN | 104521039 A | 15-04-2015 |
| | | | CN | 107093740 A | 25-08-2017 |
| | | | CN | 107293689 A | 24-10-2017 |
| | | | EP | 2882013 A1 | 10-06-2015 |
| | | | EP | 3236517 A1 | 25-10-2017 |
| | | | ES | 2910046 T3 | 11-05-2022 |
| | | | HU | E058161 T2 | 28-07-2022 |
| | | | KR | 20130138073 A | 18-12-2013 |
| | | | KR | 20130138147 A | 18-12-2013 |
| | | | KR | 20150024371 A | 06-03-2015 |
| | | | KR | 20160043531 A | 21-04-2016 |
| | | | KR | 20170017969 A | 15-02-2017 |
| | | | PL | 2882013 T3 | 30-05-2022 |
| | | | US | 2014158932 A1 | 12-06-2014 |
| | | | US | 2016218350 A1 | 28-07-2016 |
| | | | WO | 2013183974 A1 | 12-12-2013 |
| WO 2016002158 | A1 | 07-01-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024089057 A

- WO 2016002158 A